# EUROPÄISCHE PATENTSCHRIFT

(11) **EP 2 152 512 B1**
(45) Veröffentlichungstag und Bekanntmachung des Hinweises auf die Patenterteilung: **27.02.2013**
(21) Anmeldenummer: 08758658.2
(22) Anmeldetag: 21.05.2008
(51) Int. Cl.: B32B 15/08, B65D 77/20

(54) **VERPACKUNGSMATERIAL**
PACKAGING MATERIAL
MATÉRIEL D'EMBALLAGE

(30) Priorität: 24.05.2007 EP 07010312
(43) Veröffentlichungstag der Anmeldung: 17.02.2010
(73) Patentinhaber: Constantia Hueck Folien GmbH & Co. KG, 92712 Pirk (DE)
(72) Erfinder: HELMLINGER, Jürgen, 95671 Bärnau (DE); FISCHER, Andreas, 92702 Kohlberg (DE)
(74) Vertreter: Dungler, Karin
(86) Internationale Anmeldenummer: PCT/EP2008/004051
(87) Internationale Veröffentlichungsnummer: WO 2008/141808

(56) Entgegenhaltungen:
- EP-A- 0 417 380
- EP-A- 1 005 977
- EP-A- 1 086 800
- EP-A- 1 775 121
- DE-A1- 10 100 853
- DE-A1- 19 825 777
- DE-A1-102004 040 347
- US-A- 5 226 281
- US-A- 5 721 028
- US-B1- 6 866 926

## Beschreibung

Behälterabdeckungen, die für die Verpackung von Lebensmitteln, wie Milchprodukten, beispielsweise Joghurt, Käse, Topfen, Säfte, Pasteten, Erdnüsse, Dips, Fertigsoßen und dergleichen, verwendet werden, müssen an der dem Produkt zugewandten Seite lebensmittelecht (Einhaltung der lebensmittelrechtlichen Bestimmungen) ausgeführt werden.

Aus der WO 98/26931 sind Verpackungselemente bekannt, die auf der dem Füllgut zugewandten Seite eine oberflächenraue Beschichtung auf einem Trägermaterial aufweisen, wobei als Trägermaterial Kunststoff oder Aluminium oder zweilagige Verbunde aus Aluminium/Aluminium, Aluminium/Kunststoff, Kunststoff/Aluminium, Aluminium/Papier-oder dergleichen verwendet werden.

Aus der WO 01/74685 ist ein Deckelelement zum Verschließen von Behältern bekannt, das aus einer einheitlichen Metallfolie oder einer Kunststofffolie besteht.

Aus der WO 99/29508 sind teilweise geprägte Deckelelemente für Nahrungsmittelbehälter bekannt, die aus einem Folienmaterial bestehen, das unter anderem aus folgenden dreilagigen Verbundkombinationen bestehen kann: Aluminium/Papier/Kunststoff, Aluminium/Papier/Aluminium oder Aluminium/Kunststoff/Aluminium.

Aluminium ist jedoch nicht gegen alle Füllgüter, beispielsweise Joghurt, Schmelzkäse, Milchprodukte, Säfte, Pasteten, Erdnüsse, Dips, Fertigsoßen und dergleichen, beständig.

Daher müssen diese dreilagigen Verbunde an der dem Füllgut zugewandten Seite jedenfalls mit einer vollflächigen lebensmittelechten (Einhaltung der lebensmittelrechtlichen Bestimmungen) Beschichtung versehen sein.

Weiters besteht insbesondere beim Transport der Verpackungen, die mit Aluminiumabdeckungen verschlossen sind, die Gefahr des so genannten "Flexcrack", die im Wesentlichen durch die Bewegung des Füllgutes entsteht. Es treten dabei Knicke in der Aluminiumschicht der Behälterabdeckung auf. Diese Knicke führen in weiterer Folge zu Undichtheit, das Packungsgut kann austreten oder verdirbt.

Aufgabe der vorliegenden Erfindung ist es, Behälterabdeckungen bereitzustellen, die eine verbesserte Durchstoß- und Einreißfestigkeit, sowie ausgezeichnete Füllgutbeständigkeit aufweisen.

Gegenstand der Erfindung ist daher eine Behälterabdeckung umfassend einen Folienverbund mit symmetrischem Aufbau aus Polyester/Aluminium/Polyester.

Weitere vorteilhafte Merkmale der erfindungsgemäßen Behälterabdeckung sind gemäß Unteransprüche 2 bis 10 offenbart.

Der Folienverbund kann weiters an der dem Produkt zugewandten Seite eine heißsiegelnde Beschichtung aufweisen.

Vorzugsweise bestehen die Polyesterfolien aus Polyethylenterephthalat.

Zwischen zwei Polyesterfolien wird eine Aluminiumfolie unter Verwendung eines Kaschierklebers beispielsweise auf Polyurethanbasis einkaschiert.

Die Dicke der Polyesterfolien kann jeweils 3 - 100 µm, bevorzugt 10 -30 µm betragen.

Die Dicke der zwischen den Kunststofffolien eingeschlossenen Aluminiumschicht kann etwa 3 - 40 µm, bevorzugt 6 - 15 µm betragen.

Durch die Situierung der Aluminiumfolie in einem symmetrischen Verbund zwischen zwei Kunststofffolien ergeben sich zahlreiche Vorteile:

Der Verbund ist absolut korrosionsbeständig und lebensmittelecht (Einhaltung der lebensmittelrechtlichen Bestimmungen). Weiters weist der Verbund eine gegenüber vergleichbaren Verbunden oder Aufbauten mit einer Aluminiumfolie an ihrer Außenseite eine verbesserte Durchstoß- und Einreißfestigkeit auf.

Es werden Flexcrack-Beschädigungen ausgeschlossen; diese werden durch die Kunststofffolien an den Außenseiten des Verbundes verhindert.

Weiters kann die Aluminiumfolie bedruckt sein, wobei sowohl auf der Außen- als auch auf der Innenseite Druckfarben verwendet werden können, da die bedruckte Oberfläche durch die Kunststofffolie abgedeckt ist und die Druckfarbe nicht mit dem Füllgut in Berührung kommen kann.

Bei Verwendung lasierender Druckfarben bei der Bedruckung der Aluminiumfolie können zusätzlich Matt/Glanz-Effekte erreicht werden.

Weiters ist der Folienverbund wirtschaftlicher herstellbar, da gegenüber den bekannten Verbunden eine geringere Menge an teurer Aluminiumfolie (nur eine Folie anstelle von bisher zwei Folien als äußere Folien eines Verbundes) notwendig ist.

Der Folienverbund kann ungeprägt oder zumindest teilweise geprägt sein, um die Vereinzelbarkeit der Folienzuschnitte, beispielsweise in Form von Behälterabdeckungen, zu gewährleisten. Gegebenenfalls können an der Oberfläche dazu auch Abstandshalter aufgebracht sein. Solche Abstandshalter sind beispielsweise aus der WO 01/68475 in Form von expandierenden partiellen Beschichtungen bekannt. Es können aber auch andere drucktechnisch aufgebrachte partielle Beschichtungen als Abstandshalter verwendet werden.

Die Erfindung wird im Folgenden anhand von Ausführungsbeispielen, Vergleichsbeispielen sowie vorteilhaften Ausführungsformen der erfindungsgemäßen Behälterabdeckung näher erläutert.

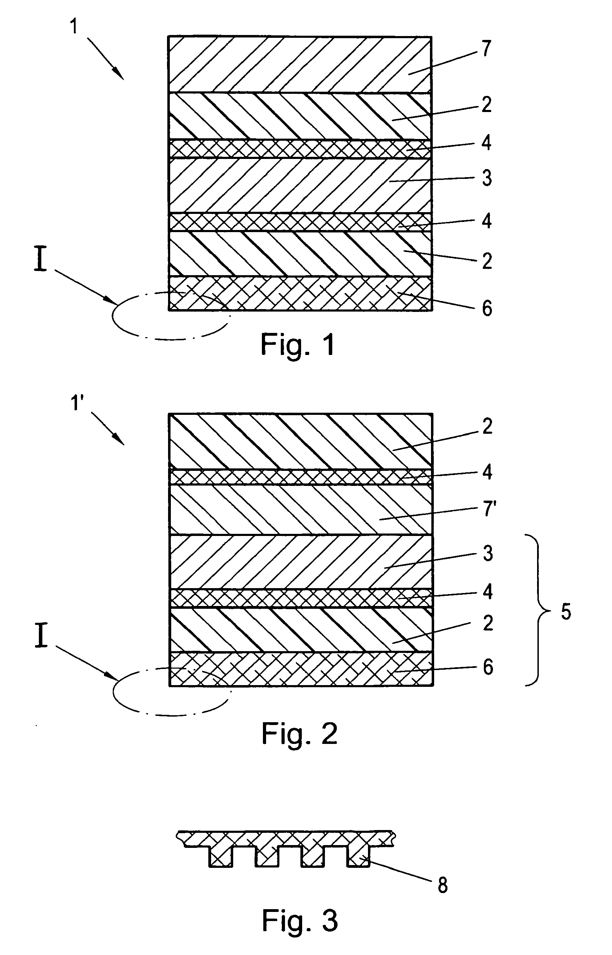

Gemäß Fig. 1 wird die erfindungsgemäße Behälterabdeckung 1 mit symmetrischem Folienverbund umfassend Polyester/Aluminium/Polyester gezeigt, wobei eine Bedruckung 7 in Form eines Schöndruckes vorgesehen ist.

Gemäß Fig. 2 wird eine alternative Ausführungsform 1' der erfindungsgemäßen Behälterabdeckung gezeigt, wobei die Bedruckung 7' mittels Zwischenlagendruck aufgebracht wird.

Fig. 3 zeigt einen Ausschnitt I der Heißsiegellackschicht 6, welche in vorteilhafter Weise in Form eines oberflächenrauen Aufdrucks, bestehend aus Abstandshalter 8, vorliegt.

Die Herstellung der erfindungsgemäßen Behälterabdeckung 1, 1' erfolgt mittels Kaschierverfahren, wobei als Kaschierkleber vorteilhafter Weise ein Kleber auf Polyurethanbasis verwendet wird.

Zur Herstellung einer Behälterabdeckung 1, wie in Fig. 1 dargestellt, wird eine Polyesterfolie, vorzugsweise eine Polyethylenterephthalatfolie 2 mit einer Schichtdicke in einem Bereich von 10 - 30 µm eingesetzt. Diese PET-Folie 2 wird an einer Seite mit dem Kaschierkleber 4 beaufschlagt und über diese Kleberschicht mit der Aluminiumfolie 3 verbunden. Die Schichtdicke der Aluminiumfolie liegt beispielsweise in einem Bereich von 6 - 25 µm. An die freiliegende Seite der Aluminiumfolie 3 wird eine weitere Kaschierkleberschicht 4 aufgebracht, an welche eine weitere PET-Folie 2 mit einer Schichtdicke im Bereich von 10 - 30 µm anschließt. An die freiliegende Seite der PET-Folie 2 wird ein Heißsiegellack 6 aufgetragen. An der gegenüberliegenden Seite wird, wie in Fig. 1 gezeigt, eine Druckschicht 7 angebracht, wofür bekannte Druckverfahren, wie Tiefdruck, Flexodruck, Digitaldruck, verwendet werden können.

Die Behälterabdeckung 1', wie in Fig. 2 gezeigt, wird insoferne hergestellt, als ein Verbund 5, bestehend aus der Aluminiumfolie 3, dem Kaschierkleber 4 und der Polyesterfolie 2, vorzugsweise eine PET-Folie, gebildet wird. An die freiliegende Seite der Aluminiumfolie 3 wird mit Zwischenlagendruck die Druckschicht 7' aufgebracht. An die freiliegende Seite der Druckschicht 7' wird wiederum ein Kaschierkleber 4 aufgetragen, welcher mit einer weiteren Polyesterfolie, vorzugsweise die PET-Folie 2, abgedeckt wird. Um die Funktion der Behälterabdeckung zu erfüllen, wird nunmehr die unbedruckte Seite mit einer Heißsiegellackschicht 6 versehen.

Die Heißsiegellackschicht 6 kann, wie in Fig. 3 gezeigt, in Form von oberflächenrauen Abstandshaltern 8 ausgebildet sein. Diese oberflächenrauen Abstandshalter 8 dienen dazu, dass zwischen den Abständen Luft eingeschlossen wird, so dass ein Entstapeln der üblicherweise in Stapeln gelagerten Behälterabdeckungen 1, 1' erleichtert wird. Zur weiteren Erleichterung dieses Entstapelungsvorganges wird der Heißsiegellack vorteilhafter Weise mit körnigen Additiven versetzt.

Eine weitere Hilfe beim Entstapeln besteht darin, sowohl den Heißsiegellack 6 als auch die bedruckte Seite 7 zu prägen, wobei eine Nadelprägung Vorrang hat. Auch diese, durch das Prägen entstandenen Erhebungen dienen dazu, dass ein Entstapeln der üblicherweise in Stapeln gelagerten Behälterabdeckungen 1, 1' erleichtert wird. Durch den mehrlagigen, symmetrischen Aufbau der Behälterabdeckung 1, 1' wird deren Erscheinungsbild durch den Nadelungsprozess nicht beeinträchtigt.

Die erfindungsgemäße Behälterabdeckung 1, 1' wird nunmehr mit einer an sich bekannten Becherplatine mit dem symmetrischen Aufbau Aluminium/PET/Aluminium verglichen. Es werden, wie aus folgender Tabelle ersichtlich, jeweils die Bruchlast (N/15 mm), die Dehnung (%) und die Durchstoßfestigkeit unter Messbedingungen mit einem Dorn 9,5 mm und einer Öffnung 70 mm ausgetestet und die Testergebnisse miteinander verglichen.

Aufbau 1 PET 12/Al 15/PET 12 (erfindungsgemäß)

Aufbau 2 PET 12/Al 25/PET 12 (erfindungsgemäß)

Aufbau 3 Al 15/PET 12/Al 15 (Stand der Technik)

| | 1 | 2 | 3 |
|---|---|---|---|
| Bruchlast längs | 73,9 | 75,2 | 71,0 |
| Bruchlast quer | 97,7 | 104,7 | 71,5 |
| Dehnung längs | 116,0 | 60,5 | 19,1 |
| Dehnung quer | 78,6 | 58,0 | 22,3 |
| Durchstoßfestigkeit | 109,2 | 100,6 | 56,0 |
| Dorn 9,5 mm | | | |
| Öffnung 70 mm | | | |

Der vorgenannten Tabelle ist zu entnehmen, dass die erfindungsgemäße Behälterabdeckung 1, 1' eine sehr hohe Durchstoß- und Einreißfestigkeit im Vergleich zu bekannten, symmetrischen Verbundaufbauten zeigt. Die Messwerte hinsichtlich Bruchlast quer sind ein Beweis dafür, dass auch üblicherweise auftretende Knickstellen, sogenannte Flexcracks, vermieden werden. Des Weiteren ist, bedingt durch den Einsatz der sehr stabilen Polyethylenterephthalatfolie die Durchstoßfestigkeit im Vergleich zu bekannten Verbundaufbauten, wie Aufbau 3 mit einer außenliegenden Aluminiumfolie, wesentlich verbessert.

Der erfindungsgemäße symmetrische Verbundaufbau ermöglicht auch eine erhöhte Korrosionsbeständigkeit, wenn in dem Lebensmittelbehälter aggressive Füllgüter und saure Verbindungen bzw. Verbindungen, welche saure Gase bilden, gelagert werden. Es wurden in diesem Zusammenhang Schmelzkäse und Soßendips als Lebensmittel ausgetestet, wobei eine Charge in bekannten Lebensmittelbehältern abgefüllt, mit einer üblichen Aluminiumfolie abgedeckt und eine weitere, identische Charge mit der erfindungsgemäßen Behälterabdeckung 1, 1' abgedeckt wurde. Nach vierwöchiger Lagerung konnte an der Aluminiumabdeckung eine Korrosion festgestellt werden, wogegen die erfindungsgemäße Behälterabdeckung 1, 1' keine Korrosionsstellen zeigte.

Des Weiteren hat es sich gezeigt, dass die erfindungsgemäße Behälterabdeckung 1, 1' für den Verbraucher leicht handhabbar ist; durch den symmetrischen Aufbau des Verbundes wird die an sich bekannte Rollneigung unterbunden, und zwar auch dann, wenn relativ geringe Materialdicken eingesetzt werden. Ein Umstand, dem auch aus Gründen der Entsorgung oftmals Rechnung getragen werden muss.

Des Weiteren zeigt die erfindungsgemäße Behälterabdeckung eine sehr gute Einreißfestigkeit, die beim Öffnen verhindert, dass scharfe Kanten an den abgerissenen Folienstücken entstehen und daher die Gefahr von Verletzungen wesentlich minimiert wird.

Da gemäß Kundenwunsch oftmals hohe Ansprüche an das Aussehen von Verpackungsmaterial, wie Behälterabdeckungen, gestellt werden, gelingt es mit der erfindungsgemäßen Behälterabdeckung 1, 1' auch diesem Anspruch gerecht zu werden, da die außen liegende Polyesterfolie, vorzugsweise eine Polyethylenterephthalatfolie, insbesondere im bedruckten Zustand ein glänzendes Erscheinungsbild zeigt. Dieser optische Effekt wird auch nach einer Nadelprägung in keinster Weise beeinträchtigt, zumal durch die eingesetzten Kunststofffolien ausreichende Elastizität beim Prägevorgang vorliegt.

Ein einwandfreies Erscheinungsbild kann auch für den Fall eines Zwischenlagendruckes erzielt werden, welches Verfahren zusätzlich den Vorteil zeigt, dass die dem Füllgut zugewandte Zwischenlage, bestehend aus Aluminium, Kaschierkleber, Polyester und Heißsiegellack, das Eindringen von Druckfarben in das Packungsgut zur Gänze verhindert. Andererseits wird die Druckfarbe durch eine Polyesterschicht abgedeckt, so dass die oftmals sensiblen Aufdrucke vor Beschädigungen geschützt werden.

Zusammenfassend kann gesagt werden, dass mit der erfindungsgemäßen Behälterabdeckung 1, 1' eine dem Kundenwunsch entsprechende, leicht handhabbare Verpackungslösung gefunden wurde. Dieser Effekt wird dadurch erzielt, dass ein symmetrischer Verbundaufbau, bestehend aus einer Polyesterfolie, einer Aluminiumfolie und einer Polyesterfolie verwendet wird. Besonders bevorzugt ist in diesem Verbundaufbau der Einsatz von Polyethylenterephthalat (PET). Da Polyester, und somit auch Polyethylenterephthalat (PET), zu Heißsiegellacken eine stabile Verbundfestigkeit zeigen, weisen die erfindungsgemäßen Behälterabdeckungen die selben Siegeleigenschaften wie an sich bekannte Aluminiumbecherplatinen auf. Dennoch kann im Vergleich zu diesen auch säurehältiges Packungsgut gelagert werden, da die PET-Folie eine ausreichende Stabilität, insbesondere gegenüber Säuren sowie sauren Gasen zeigt.

## Patentansprüche

1. Behälterabdeckung, umfassend einen Folienverbund mit symmetrischem Aufbau aus Polyester/Aluminium/Polyester.

2. Behälterabdeckung nach Anspruch 1, **dadurch gekennzeichnet, dass** die Polyesterfolie aus Polyethylenterephthalat besteht.

3. Behälterabdeckung nach Anspruch 1 oder 2, **dadurch gekennzeichnet, dass** die Dicke der Polyesterfolie in einem Bereich von 3 - 100 µm, vorzugsweise 10 - 30 µm, liegt.

4. Behälterabdeckung nach einem der Ansprüche 1 bis 3, **dadurch gekennzeichnet, dass** die Aluminiumfolie eine Dicke von 3 - 40 µm, vorzugsweise 6 - 25 µm, beträgt.

5. Behälterabdeckung nach einem der Ansprüche 1 bis 4, **dadurch gekennzeichnet, dass** die Behälterabdeckung an der dem Füllgut abgewandten Seite eine Bedruckung in Form eines Schöndruckes aufweist.

6. Behälterabdeckung nach einem der Ansprüche 1 bis 4, **dadurch gekennzeichnet, dass** die Behälterabdeckung an der dem Füllgut abgewandten Seite eine Bedruckung in Form eines Zwischenlagendruckes aufweist.

7. Behälterabdeckung nach einem der Ansprüche 1 bis 6, **dadurch gekennzeichnet, dass** die Behälterabdeckung an der dem Füllgut zugewandten Seite eine Heißsiegellackschicht aufweist.

8. Behälterabdeckung nach Anspruch 7, **dadurch gekennzeichnet, dass** die Heißsiegellackschicht oberflächenrau ist und die Form von geometrisch angeordneten Abstandshaltern aufweist.

9. Behälterabdeckung nach Anspruch 7 oder 8, **dadurch gekennzeichnet, dass** die Heißsiegellackschicht körnige Additive enthält.

10. Behälterabdeckung nach einem der Ansprüche 1 bis 9, **dadurch gekennzeichnet, dass** die Behälterabdeckung ein- oder beidseitig geprägt ist.

## Claims

1. Container covering, comprising a composite film with symmetrical structure of polyester/aluminum/polyester.

2. Container covering according to claim 1, **characterized in that** the polyester film consists of polyethylene terephthalate.

3. Container covering according to claim 1 or 2, **characterized in that** the thickness of the polyester film is in a range of 3 - 100 µm, preferably 10 - 30 µm.

4. Container covering according to one of claims 1 to 3, **characterized in that** the aluminum foil has a thickness of 3 - 40 µm, preferably 6 - 25 µm.

5. Container covering according to one of claims 1 to 4, **characterized in that** the container covering on the side that faces away from the package contents has a printing in the form of first-form printing.

6. Container covering according to one of claims 1 to 4, **characterized in that** the container covering on the side that faces away from the package contents has a printing in the form of an interleaving printing.

7. Container covering according to one of claims 1 to 6, **characterized in that** the container covering on the side that faces the package contents has a heat -seal lacquer layer.

8. Container covering according to claim 7, **characterized in that** the heat-seal lacquer layer is surface-rough and has the form of geometrically arranged spacers.

9. Container covering according to claim 7 or 8, **characterized in that** the heat-seal lacquer layer contains granular additives.

10. Container covering according to one of claims 1 to 9, **characterized in that** the container covering is embossed on one or both sides.

## Revendications

1. Couvercle de récipient, comprenant un ensemble de feuilles présentant une structure symétrique en polyester/aluminium/polyester.

2. Couvercle de récipient selon la revendication 1, **caractérisé en ce que** la feuille de polyester est constituée de polyéthylènetéréphtalate.

3. Couvercle de récipient selon les revendications 1 ou 2, **caractérisé en ce que** l'épaisseur de la feuille de polyester est comprise entre 3 et 100 µm, de préférence entre 10 et 30 µm.

4. Couvercle de récipient selon l'une des revendications 1 à 3, **caractérisé en ce que** la feuille d'aluminium a une épaisseur de 3 à 40 µm, préférentiellement de 6 à 25 µm.

5. Couvercle de récipient selon l'une des revendications 1 à 4, **caractérisé en ce que** ledit couvercle de récipient présente sur le côté opposé au contenu du récipient un motif imprimé sous forme d'une impression au recto.

6. Couvercle de récipient selon l'une des revendications 1 à 4, **caractérisé en ce que** ledit couvercle de récipient présente sur le côté opposé au contenu du récipient un motif imprimé sous forme d'une impression sur couche intermédiaire.

7. Couvercle de récipient selon l'une des revendications 1 à 6, **caractérisé en ce que** ledit couvercle de récipient présente sur le côté faisant face au contenu du récipient une couche de laque de thermoscellage.

8. Couvercle de récipient selon la revendication 7, **caractérisé en ce que** la couche de laque de thermoscellage est rugueuse en surface et présente la forme d'espaceurs disposés de manière géométrique.

9. Couvercle de récipient selon les revendications 7 ou 8, **caractérisé en ce que** la couche de laque de thermoscellage contient des additifs granulés.

10. Couvercle de récipient selon l'une des revendications 1 à 9, **caractérisé en ce que** le couvercle de récipient présente un gaufrage sur un ou sur deux de ses faces.
